# EUROPEAN PATENT APPLICATION

(11) **EP 2 014 506 A1**
(43) Date of publication of application: **14.01.2009**
(21) Application number: 07109750.5
(22) Date of filing: 06.06.2007
(51) Int. Cl.: B60N 2/48

(54) **Motor-vehicle seat having a headrest with an anti-whiplash upward sliding movement**

(71) Applicant: Martur Sunger ve Koltuk Tesisleri Ticaret Sanayi A.S., 80670 Maslak Istanbul (TR)
(72) Inventor: Bracesco, Roberto, 10043 Orbassano (Torino) (IT)
(74) Representative: Notaro, Giancarlo

(57) **Abstract**

A headrest (1) for a motor vehicle seat is vertically slidably mounted with respect to its supporting structure (2). In the condition of normal use, the headrest is held in a lowered position. In case of a rear collision of the motor vehicle, a device (25,21) for detecting the rear collision releases the headrest (1) causing a rapid movement thereof towards a raised position, so as to provide an adequate support for the head of the occupant of the seat, thus avoiding the detrimental effects of the so-called whiplash.

## Description

The invention relates to motor-vehicle seats of the type comprising:
- a backrest, including a backrest frame,
- a headrest supporting structure connected to the backrest frame,
- a headrest including a headrest frame which is provided with a headrest padding and which is mounted on said supporting structure so as to be movable between a first position of normal use and an anti-whiplash second position, and
- means for causing a movement of the headrest from its first position to its second position following a rear collision of the motor-vehicle.

A motor-vehicle seat of the above indicated type is disclosed in US-A-5 934 750. In this known solution, the headrest comprises an inertial mass supported by the headrest frame, for causing a forward rotation of the headrest following a rear collision of the motor-vehicle, so as to provide an adequate support to the head of the occupant of the seat, in order to avoid, or at least reduce, the so-called "whiplash" for the occupant.

The same applicant has also proposed in its copending European patent applications EP 07 103 793 and EP 07 103 796, which are still secret at the filing date of the present application, devices of the above indicated type, in which an inertial mass is provided for activating a forward movement of the headrest following a rear collision of the motor-vehicle.

In another copending European patent application EP 07 107 762, also secret at the filing date of this application, the same applicant has proposed a seat of the above indicated type in which on the backrest frame there is mounted an element for detecting a pressure exerted by the back of the occupant of the seat against the backrest and in which there is further provided a mechanical transmission interposed between said detecting element and the above mentioned means for causing the movement of the headrest from its first position to its second position. In one preferred embodiment shown in this previous application, the above mentioned mechanical transmission is constituted by a Bowden cable transmission and the above mentioned detecting element is constituted by a flexible element tensioned horizontally between two lateral supports of the backrest frame of the seat and having a central portion operatively connected to the above mentioned Bowden cable transmission. The use of the flexible cable provides the advantage that the above described arrangement can be adopted while leaving the possibility of adjustment in height of the headrest position.

Finally, from German patent application DE 100 22 441 there is known a seat of the above indicated type in which the movement of the headrest from its first position to its second position involves both a forward tilting movement and an upward movement of the headrest.

Studies and tests conducted by the applicant on the effects of rear collisions of motor-vehicles have shown that the solutions proposed and/or made heretofore in the field of headrests with anti-whiplash devices are not fully satisfactory from the standpoint of safety for the user, since they are not able to totally avoid the detrimental effects of the so-called whiplash on the body of the user. It is yet to be noted that in the case of a strong rear collision of the motor-vehicle, the force applied by the occupant's back against the seat backrest is so huge as to generally cause a deformation of the frame of the seat backrest. This deformation is so relevant as to cause a backward inclination of the backrest, so that the body of the user tends, because of the inertia due to the collision, to slide upwardly along the surface of the backrest. Following this movement, the occupant's head comes to be at a position greatly displaced upwardly, along the general plane of the backrest, with respect to the headrest. As a result of these studies, the applicant has thus verified that an efficient elimination of the whiplash can be obtained primarily through a relevant upward movement, in addition to a forward movement, of the headrest.

Starting from these observations, the present invention has the object to provide a seat with a headrest having an anti-whiplash device which is more efficient with respect to the devices used heretofore, and which is further characterized by an extremely simple and efficient structure.

In view of achieving this object, the invention provides a motor-vehicle seat having the features which have been indicated at the beginning and further characterized in that:
- the headrest frame is slidably mounted on said supporting structure substantially along the vertical direction of the headrest, between said first position and said second position,
- between the headrest frame and the headrest supporting structure there are interposed spring means for biasing the headrest towards said second position,
- stop means are provided for holding the headrest in its first position, against the action of said spring means, and
- said means for causing the movement of the headrest from its first position to its second position comprise:
- means for detecting a rear collision of the motor-vehicle, and
- means for de-activating said stop means following detection of a rear collision by said detecting means.

In the present description, and in the annexed claims, the expression "vertical direction of the headrest" is used to indicate the vertical direction of the body of the headrest, which may or may not be parallel to an absolutely vertical direction, depending upon the inclination given to the headrest. The headrest supporting structure typically comprises a pair of tubular rods on which the headrest frame is mounted. With this arrangement, the vertical direction of the headrest is substantially parallel to the direction of the upper terminal portions of the headrest supporting rods, on which the headrest frame is mounted.

As it will be clearly apparent from what has been indicated, the primary feature of the seat according to the invention lies in that the movement of the headrest from its first position to its second position, which is caused in order to prevent the whiplash, is substantially a straight linear sliding upward movement, substantially parallel to the above mentioned vertical direction of the headrest.

Preferably, there are provided means for holding the headrest in its raised position, after that it has been moved to this position following a rear collision.

Due to the above mentioned features, the seat according to the invention is able to efficiently prevent the whiplash for the occupant of the seat following a rear collision of the motor-vehicle. This result is also obtained with an extremely simple and efficient structure.

In the present invention, the means for detecting the rear collision, which cause the release of the headrest and the resulting upward movement thereof, may be of any type; for instance, they may be of the type comprising an inertial mass, adapted to detect a rear collision of the motor-vehicle, or they may be comprised of an accelerometer type sensor. In one preferred embodiment, however, the above mentioned means are of the above mentioned type, which was already proposed in the previous European patent application EP 07 107 762 of the same applicant and therefore preferably comprise a Bowden cable transmission which is activated by a detecting element for detecting the pressure exerted by the back of the occupant of the seat against the backrest in case of a rear collision of the motor-vehicle.

In a preferred embodiment, the supporting structure of the headrest comprises a pair of tubular rods on whose upper terminal portions there is slidably mounted the headrest frame and said upper terminal portions are inclined forwardly, with respect to the lower portions of the same rods, so that the sliding movement of the headrest from its first position to its second position causes, in addition to the upward movement of the headrest, also a forward movement of the headrest with respect to the general plane of the seat backrest.

Further features and advantages of the invention will become apparent from the description which follows with reference to the annexed drawings, given purely by way of non-limiting example, in which:
- figures 1, 2 are cross-sectional views which show a preferred embodiment of the headrest forming part of the seat according to the invention, with the headrest in its position of normal use and in its anti-whiplash raised position, respectively,
- figures 3, 4 are front cross-sectional views of the headrest in the above mentioned two positions, according to lines III and IV of figures 1, 2,
- figures 5, 6 are perspective views which show the headrest supporting structure in the two different positions, and
- figure 7 is a diagrammatic perspective view of a detail of the backrest of the seat according to a preferred embodiment of the invention.

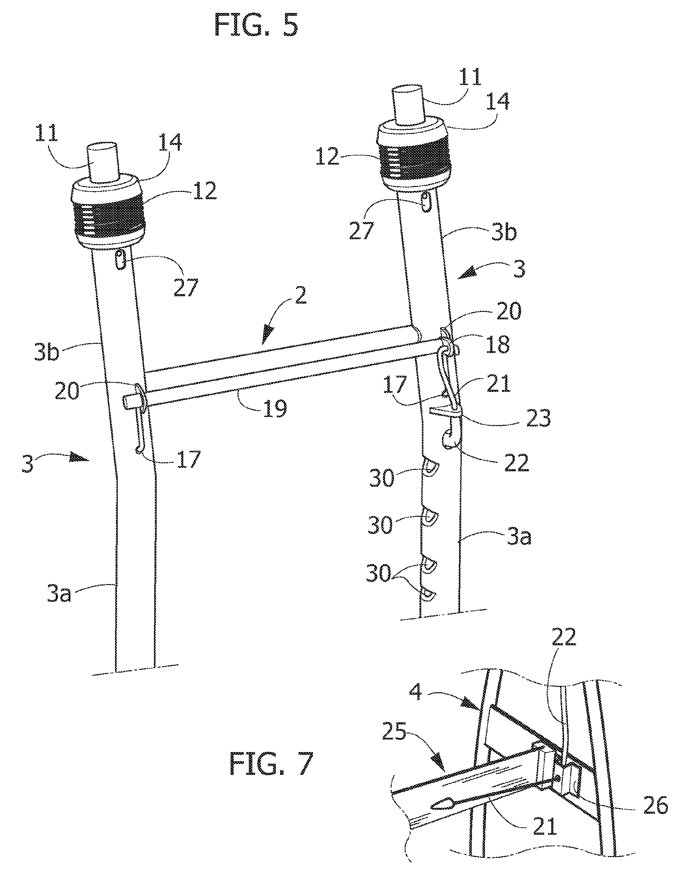

In the drawings, reference numeral 1 generally designates a headrest forming part of the seat according to the invention. According to a technique conventional per se, the headrest 1 comprises a supporting structure 2 including, with reference to the illustrated example, a pair of tubular rods 3 which are received within bushes (not shown) provided at the top of the frame of the seat backrest, which frame is partially visible in figure 7 and designated by reference numeral 4. According to a conventional art, the rods 3 can be locked within the respective bushes. The details of construction relating to the frame 4 of the seat backrest and the means by which the supporting rods 3 are connected to the frame are not shown herein, since they can be made in any known way.

It is also to be noted that the headrest supporting structure could have any other configuration, for instance it could include a single central column, for instance with an elliptical cross-section.

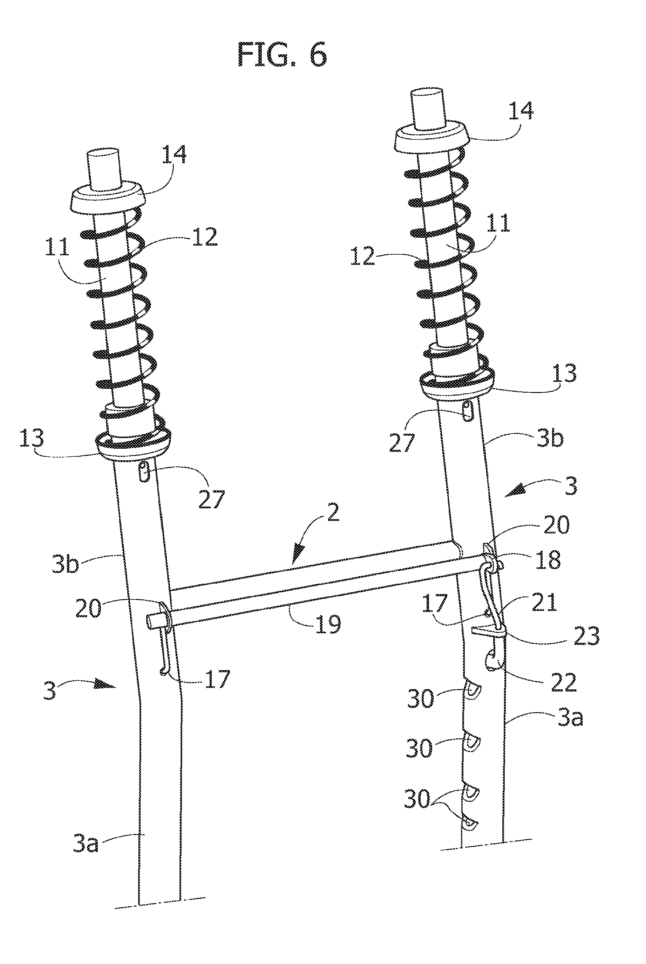

As shown in figures 5, 6, the rods 3 have their lower portions provided with a plurality of notches 30 which are spaced vertically from each other, for cooperation with locking means provided on the seat backrest for selectively locking the headrest at a selected position in height corresponding to that desired by the user.

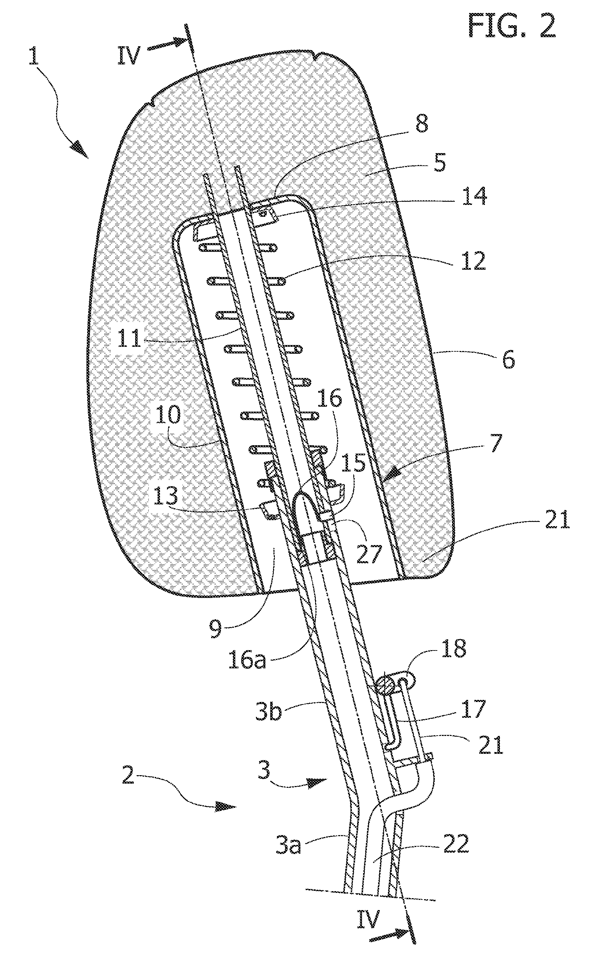

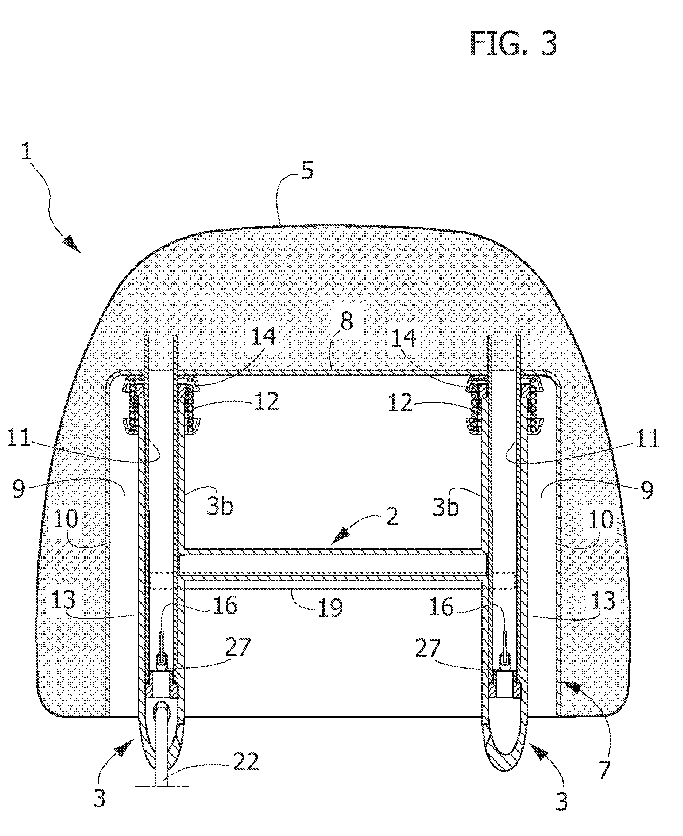

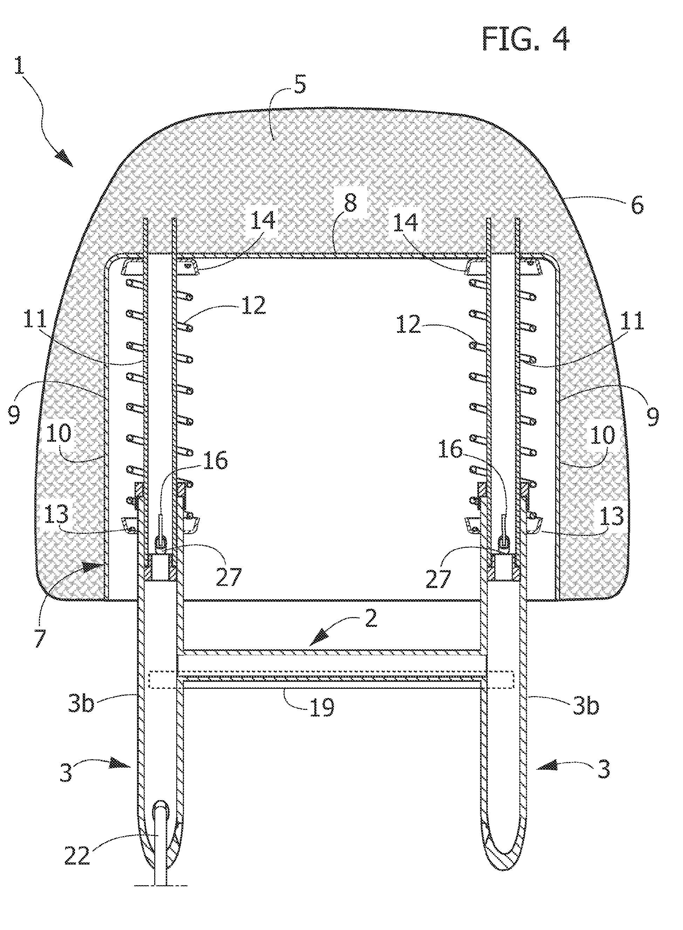

Also with reference to figures 5, 6, in the embodiment shown the supporting rods 3 have upper portions 3b which are forwardly inclined with respect to the lower portions 3a. Also the case is not excluded in which the upper portions 3b are pivotally connected to the portions 3a so that their inclination can be adjusted. As clearly shown in the drawings, particularly in figures 3, 4, the headrest 1 comprises a conventional padding 5 made of foamed plastic material, protected by a cover 6 and mounted on a headrest frame 7 which is in form of a box opened downwardly, with an upper wall 8, two lateral walls 9 and front and rear walls 10. To the upper wall 8 of frame 7 there are rigidly connected two tubular rods 11 which are slidably mounted within the upper portions 3b of the supporting rods 3. each inner rod 11 is biassed towards a raised position (shown in figures 2,4) by a respective helical spring 12 whose lower end rests on a supporting ring 13 fixed to the respective outer tubular rod 3b, and whose upper end rests against a supporting ring 14 anchored to the inner tubular rod 11 and on its turn resting against the wall 8 of frame 7.

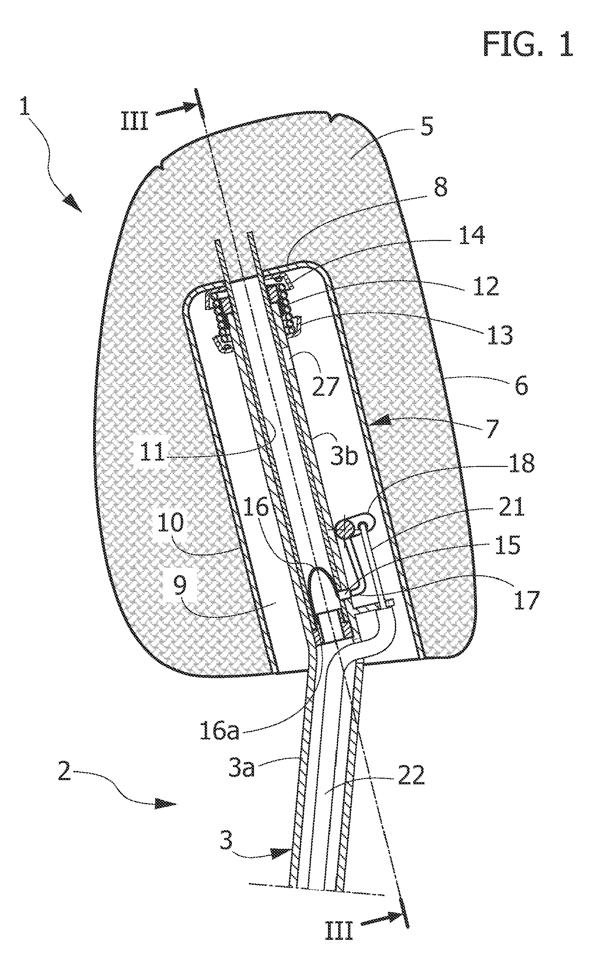

In the condition of normal use of the headrest, the latter is held in the lowered position (shown in figures 1, 3, 5) by two stop elements 15, for instance in form of pins, respectively associated to the two supporting rods 3. As shown in figure 5, each stop element 15 engages through facing holes of the inner tubular rod 11 and the outer rod 3b so as to prevent a relative movement of these elements. Pin 15 is biassed into this position by a leaf spring 16, bent according to an upturned U, which is received within each of the inner tubular rods 11 and has one end 16a anchored to the structure of rod 11 and the opposite end which is free and carries the stop pin 15.

The release of the headrest from the position of normal use shown in figures 1, 3, 5, with a resulting sliding movement towards the raised position shown in figures 2, 4, 6, which is obtained due to the effect of springs 12 following the movement of each of the stop elements 15 away from its engaging position. To this end, there are provided two pushing elements 17 in form of arms with a bent free end which are carried by a rotatable shaft 19, which is rotatably supported around a transverse axis by ears 20 projecting from the supporting rods 3b. A rotation of shaft 19 around its axis can be driven by means of a Bowden cable 21 having one end anchored to one ear 18 projecting from shaft 19. The Bowden cable 21 is guided within a sheath 22 which is on its turn arranged within one of the supporting rods 3 and has one end supported by a tab 23 projecting from the supporting rod 3. The opposite end of the Bowden cable is connected to a member for detecting the pressure exerted by the occupant of the seat against the backrest, according to what will be described in detail in the following with reference to figure 7.

In the case of a rear collision of the motor vehicle, the Bowden cable is put under tension, in a way which will be described in the following, so that shaft 19 is caused to rotate so as to push the ends of the two arms 17 within respective holes of the tubular rods 3b. With reference to figures 1,2 each of arms 17 thus comes in contact with a respective stop element 15 and pushes it radially inwardly against the action of the leaf spring 16, so as to disengage stop element 15 from its associated hole. Following the disengagement of the stop elements 15, the body of the headrest moves abruptly upwardly, through the sliding movement of the tubular rods 11 within the tubular rods 3b under the action of springs 12.

Therefore, in the seat according to the invention, the detection of a rear collision of the motor vehicle causes a movement of the body of the headrest in a direction substantially parallel to the vertical direction of this body. In the case of the illustrated example, it is important to note that the vertical direction of the body of the headrest is not necessarily parallel to an absolutely vertical direction, but rather it is inclined forwardly with respect to the general plane of the backrest, due to the forward inclination of the upper portions 3b of the supporting rods 3. Due to this inclination, the upward sliding movement of the headrest causes also a forward movement of the headrest, so as to provide an adequate support for the head of the occupant of the seat, also in very critical conditions following a strong rear collision of the motor vehicle.

The means used for detecting the rear collision and for activating the release of the headrest may be of any known type. For instance, activation means may be provided comprising an inertial mass or accelerometer type sensors. However, preferably, similarly to what has been proposed in the previous patent application of the applicant which has been identified above, the activation means include the above described Bowden cable transmission.

The end of cable 21 opposite to that connected to the rotatable shaft 19 is anchored to the central portion of a flexible strip 25, for instance made of metal material or plastic material, which is horizontally tensioned between the two sides of the backrest frame 4, with the main face of the strip substantially parallel to the general plane of the backrest (figure 7). Strip 25 acts as a detecting element for detecting the pressure exerted by the back of the occupant of the seat against the backrest. The flexible cable 21 is directed to a support 26 fixed to one side of the backrest frame 4, so as to extend along a horizontal transverse direction, substantially parallel to strip 25. The sheath 22 has its end adjacent to strip 25 which is anchored to support 26.

In the case of a rear collision of the motor vehicle, the back of the occupant pushes the strip 25 backwardly with a force grater than a threshold value, sufficient for generating a tension on the flexible cable 21 which overcomes the action of springs 16 and therefore moves the stop elements 15 inwardly within the tubular rods 11, so that the headrest is released and moves abruptly upwardly, with a sliding movement of the rods 11 within rods 3b.

In the raised position, the stop elements 15 engage apertures 27 formed at the upper ends of the tubular rods 3b, so as to hold the headrest in the raised position thus preventing a return of the latter to the condition of normal use.

The configuration and the arrangement of the Bowden cable transmission which has been described by way of example may of course amply vary. It is also possible for instance, that the portion of the flexible cable associated to the backrest extends throughout the whole width of the backrest. It is also possible that the flexible cable 21 is used directly as a pressure detecting element, with no use of strip 25. In any case, the pressure detecting element may also be configured and arranged in a way totally different with respect to what has been described purely by way of example. It would thus be possible for instance to provide a detecting element in form of a tilting lever able to be rotated following a pressure applied by the backrest of the occupant. Similarly, it would be possible to use any type of mechanical transmission, therefore also a transmission which does not make use of a flexible cable, in order to transmit the movement of the pressure detecting element to the elements 17. As also already indicated, it is further possible to use means for activating release of the headrest which are of a type totally different from that which has been described herein, for instance of the type according to the known solutions which make use of activating means including an inertial mass or accelerometer type sensors.

Naturally, while the principle of the invention remains the same, the details of construction and the embodiments may widely vary with respect to what has been described above, without departing from the scope of the present invention, as defined in the annexed claims.

For instance, in lieu of the helical springs 12, gas springs may be used (particularly in the case of a solution with a single headrest supporting column). The operating speed of these springs is anyhow adjusted so as to ensure that the headrest moves rapidly to the raised position before that the occupant's head begins to move backwardly, so as to provide the required safety against the whiplash.

## Claims

1. Motor vehicle seat, comprising:
- a backrest including a backrest frame (4),
- a structure (3) for supporting the headrest (1) connected to the backrest frame (4),
- a headrest (1), including a headrest frame (7) which is provided with a headrest padding (5) and is mounted on said supporting structure (3) so as to be movable between a first position of normal use and a second anti-whiplash position, and
- means for causing a movement of the headrest (1) for its first position to its second position following a rear collision of the motor vehicle,
**characterised in that** the headrest frame (5) is slidably mounted on said supporting structure (2) along the vertical direction of the headrest between said first position and said second position,
- between the headrest frame (7) and the supporting structure (2) of the headrest there are interposed spring means (12) for biasing the headrest (1) towards said second position,
- stop means (15) are provided for holding the headrest (1) in its first position, against the action of said spring means (12), and
- said means for causing the movement of the headrest (1) from its first position to its second position comprise:
- means for detecting a rear collision of the motor vehicle, and
- means for de-activating said stop means (15) following detection of a rear collision by said detecting means.

2. Seat according to claim 1, **characterised in that** said supporting structure (2) of the headrest (1) comprises a pair of tubular rods (3) and **in that** said headrest frame (7) includes two rods (11) slidably mounted within upper portions (3b) of said supporting rods (3).

3. Seat according to claim 2, **characterised in that** said spring means comprise a helical spring (12) operatively interposed between the upper portion (3b) of each of said supporting rods (3) and said inner slidable rod (11).

4. Seat according to claim 3, **characterised in that** said stop means comprise a stop element (15) elastically biassed to a position in which it engages facing holes formed in each of said upper portions (3b) of the supporting rods (3) and in the associated inner rod (11).

5. Seat according to claim 4, **characterised in that** each stop element (15) is elastically biased to its engagement position by a spring element (16) arranged within the associated inner rod (11).

6. Seat according to any of the previous claims, **characterised in that** said means for de-activating said stop means comprise at least an actuating member (17) carried by the headrest supporting structure (2) and movable between a rest position and an active position for de-activating said stoop means (15).

7. Seat according to claim 6, **characterised in that** said actuating member is connected by a mechanical transmission (21) to means for detecting a rear collision of the motor vehicle.

8. Seat according to claim 7, **characterised in that** said mechanical transmission is a transmission including a Bowden cable (21).

9. Seat according to any of the previous claims, **characterised in that** said means for detecting a rear collision of the motor vehicle comprise a detecting member (25) for detecting the pressure exerted by the occupant against the backrest of the seat.

10. Seat according to claim 9, **characterised in that** said detecting member comprises a flexible element (25) which is horizontally tensioned between the two sides of the frame (4) of the backrest.

11. Seat according to any of the previous claims, **characterised in that** said frame (7) of the headrest is slidably mounted on the headrest supporting structure (2) along a direction inclined forwardly with respect to the general plane of the seat backrest, so that the sliding movement of the headrest (1) from its first position to its second position causes both an upward movement and a forward movement of the headrest.

12. Seat according to claim 1, **characterised in that** said means for detecting a rear collision are of the type comprising an inertial mass.

13. Seat according to claim 1, **characterised in that** said means for detecting a rear collision are of a type comprising accelerometer type sensors.

14. Seat according to any of the previous claims, **characterised in that** it comprises stop means for holding the headrest in its second position once it has moved to its second position.

15. Seat according to claim 4, **characterised in that** said stop element (15) is arranged to engage facing holes formed in each of said upper portions (3b) of the supporting rods (3) and in the associated inner rod (11) also in the second position of the headrest, so as to hold the headrest in this second position once the headrest has moved to its second position.
